# EUROPÄISCHE PATENTSCHRIFT

(11) **EP 1 094 186 B1**
(45) Veröffentlichungstag und Bekanntmachung des Hinweises auf die Patenterteilung: **13.08.2003**
(21) Anmeldenummer: 99117612.4
(22) Anmeldetag: 07.09.1999
(51) Int. Cl.: E05F 3/22, E05F 15/14, B60M 1/34

(54) **Schiene mit Stromzuführungseinrichtung**
Rail with current supply device
Rail avec dispositif d'alimentation de courant

(43) Veröffentlichungstag der Anmeldung: 25.04.2001
(73) Patentinhaber: GEZE GmbH, 71229 Leonberg (DE)
(72) Erfinder: Käser, Uwe, 75446 Wiernsheim (DE); Hahn, Erhard, 71379 Leutenbach (DE)

(56) Entgegenhaltungen:
- EP-A- 0 764 752
- DE-A- 19 831 765
- US-A- 3 908 309
- US-A- 4 040 143

## Beschreibung

Die Erfindung betrifft eine Tür mit Schieneneinrichtung mit den Merkmalen des Oberbegriffs des Patentanspruchs 1.

Die elektrische Energie und/oder die elektrischen Signale wird bzw. werden einer oder mehreren elektrischen Komponenten zugeführt, die ortsfest in oder an der Schiene angeordnet ist bzw. sind. Die Schiene ist Teil eines kraftübertragenden Gestänges eines Türantriebs, z.B. Türschließers, oder Teil einer Führungseinrichtung eines verschiebbaren Flügels einer Tür.

Aus der US 4,040,143 ist eine Schieneneinrichtung eines Gleitarmtürschließers bekannt. Sie weist eine in der Schiene integrierte elektromechanische Feststelleinrichtung mit Rauchmelder auf. Die Verbindung der einzelnen Systemkomponenten erfolgt über in einem im Anschluss an die Gleitschiene angeordneten Abdeckprofil lose verlegte Verbindungsleitungen. Aufgrund dieser Anordnung entstehen Nachteile durch aufwendige Montage der Einzelleitungen; insbesondere die nachträgliche Montage von elektrischen Komponenten in oder an der Gleitschiene wird durch diese Anordnung sehr erschwert oder sogar unmöglich gemacht.

Aus der DE 93 01 476 U1 ist eine weitere Schieneneinrichtung eines Gleitarmtürschließers bekannt. Sie weist ebenfalls eine in der Schiene integrierte elektromechanische Feststelleinrichtung mit Rauchmelder auf. Die Verbindung der einzelnen Systemkomponenten erfolgt über lose innerhalb der Schiene verlegte Verbindungsleitungen. Aufgrund dieser Anordnung entstehen ebenfalls Nachteile durch aufwendige Montage von Einzelleitungen sowie insbesondere bei der Betriebssicherheit. Die dauerhafte Betriebssicherheit dieser Anordnung ist gefährdet, da die Verbindungsleitungen relativ ungeschützt sind vor Berührung durch bewegliche Teile.

Aus der DE 198 31 765 A1 ist eine automatische Schiebetür mit einer Laufschieneneinrichtung bekannt. Flügelfest angeordnete elektrische Komponenten (z.B. Antriebsmotoren) werden über laufschienenfest angeordnete Stromschienen abgreifende Schleifer mit Energie und Signalen versorgt.

Aufgabe der Erfindung ist es, neuartige Möglichkeiten für die Zuführung elektrischer Energie und/oder elektrischer Signale zu elektrischen Einrichtungen, die innerhalb oder außerhalb einer Schieneneinrichtung angeordnet sind, zu schaffen.

Die Aufgabe wird gelöst durch eine Schieneneinrichtung gemäß Anspruch 1.

An oder in der Schiene oder einem Profilgehäuse, in dem diese Schiene angeordnet ist, können eine Vielzahl von elektrischen Komponenten angebracht werden. Der Montageaufwand zum Anbringen der elektrischen Komponenten wird erheblich reduziert, wenn innerhalb der Schiene oder dem Profilgehäuse eine elektrische Energie- und/oder Signalübertragungseinrichtung angeordnet ist, über die in vielfältiger, den jeweiligen Erfordernissen individuell anpassbarer Weise unterschiedliche elektrische Komponenten mit elektrischer Energie und/oder elektrischen Signalen versorgt werden können.

Die elektrische Energie- und/oder Signalübertragungseinrichtung innerhalb oder außerhalb des Profils der Schiene kann so gestaltet sein, dass die Schiene gemäß den räumlichen Gegebenheiten individuell abgelängt werden kann. Hierdurch ist eine flexible Anpassung an bauliche Gegebenheiten möglich.

Bei der Ausgestaltung der elektrischen Leitungen sind verschiedene Ausführungen möglich: So kann die Leitung als mehrpolige Flachbandleitung ausgeführt sein. Die einzelnen Leiter können jeweils eine eigene Isolierung aufweisen, welche den Leiter umhüllt und durch Stege mit den jeweils benachbarten Isolierungen verbunden ist. Alternativ ist es möglich, die einzelnen Leiter in separaten Isolatoren aufzunehmen, wobei die einzelnen Leiter dann keine eigene Isolierungshülle aufweisen; diese Anordnung bietet sich bei biegesteifen oder starren Leitern, d.h. sogenannten Stromschienen, an.

Die Verbindung der angeschlossenen elektrischen Komponenten zu den bereits in der Schiene vorverlegten elektrischen Leitungen kann z.B. über automatisch kontaktierende Schneidkopf-Kontaktstifte oder über mehrpolige, verpolungssichere Buchsen erfolgen, die in festen oder unregelmäßigen Abständen auf den elektrischen Leitungen angeordnet sind und eine definierte Anschlussbelegung aufweisen.

Ein Baukastensystem ist leicht realisierbar, bei dem eine Vielfalt von Komponenten entsprechend den individuellen Anforderungen an oder innerhalb der Schiene angeordnet werden können. Die Montageposition der elektrischen Komponenten ist hierbei in gewissen Grenzen frei wählbar und somit den jeweiligen örtlichen Gegebenheiten anpassbar. Eine nachträgliche Erweiterung der Schienenanordnung um weitere elektrische Komponenten ist einfach möglich, ebenso der Austausch einzelner Komponenten.

Durch die erfindungsgemäße Anordnung der elektrischen Versorgungsleitungen ergibt sich eine erhebliche Montageerleichterung, da die Leitungen bereits vormontiert ausgeliefert werden und ein nachträgliches umständliches Einziehen der Leitungen in die Schiene entfällt. Da die elektrischen Leitungen fest und unbewegbar in oder an der Schiene montiert sind, besteht keinerlei Gefahr, dass die Leitungen während des Betriebs durch Kontakt mit beweglichen Elementen beschädigt werden.

Die Befestigung der elektrischen Leitungen in oder an der Schiene kann kraftschlüssig erfolgen, z.B. durch Verklemmen in einer hinterschnittenen Aussparung des Schienenprofils. Die Ausformung der Aussparung des Schienenprofils kann mehr oder weniger komplementär zur Außenkontur der elektrischen Leitungen ausgebildet sein, so dass sich gegebenenfalls ein Formschluss ergibt. Die Verankerung der elektrischen Leitungen im oder am Schienenprofil kann an mehreren Punkten erfolgen oder sich über die gesamte Länge des Schienenprofils erstrecken, wobei jeweils entweder eine unlösbare Befestigung, z.B. durch Eingießen oder Verkleben, oder eine lösbare Befestigung, z.B. durch Einklipsen oder Verrasten, möglich ist.

Die einzelnen in oder an der Schiene angeordneten Leitungen können jeweils zur Versorgung bestimmter elektrischer Komponenten benutzt werden. So ist es beispielsweise möglich, dass eine der Leitungen als gemeinsame Masseverbindung für mehrere Komponenten benutzt wird, während jeweils eine andere Leitung zur Versorgung einer bestimmten elektrischen Komponente dient. Hierdurch kann bereits bei der Fertigung der Schiene durch eine vereinheitlichte Kabelbelegung die spätere Nutzung bestimmter Leitungen für spezifische Zwecke festgelegt werden, wodurch die Installation wesentlich erleichtert wird, beispielsweise, wenn bekannt ist, welche Leitung einer bestimmten Farbe stets mit Masse und welche stets mit der Versorgungsspannung verbunden ist.

In einer anderen erfindungsgemäßen Ausführung erfolgt die elektrische Versorgung einer elektrischen Einrichtung über vorzugsweise federnd gelagerte Kontaktstifte, die in einer Stromschiene, vorzugsweise zum Positionieren der elektrischen Einrichtung, gleiten und diese dabei vorzugsweise permanent elektrisch kontaktieren, wobei die Stromschiene fest mit der Schiene verbunden ist und vorzugsweise im Inneren der Schiene angeordnet ist. Die elektrische Energieund/oder Signalübertragung erfolgt über mehrere vorzugsweise parallel angeordnete Stromschienen, wobei die zu anzuschließenden elektrischen Komponenten jeweils mit bestimmten Stromschienen kontaktieren. Die elektrischen Komponenten sind mit den Schleifkontakten elektrisch leitend verbunden und können leicht in die gewünschte Position entlang der Schiene verschoben und positioniert werden.

Die Anzahl der Pole der elektrischen Energie- und/oder Signalübertragungseinrichtung richtet sich nach der Anzahl und/oder Art der anzuschließenden elektrischen Komponenten, so dass selbstverständlich alle Polzahlen prinzipiell möglich sind, sofern die Platzverhältnisse dies zulassen. So ist es z.B. möglich, die Stromschienenanordnung lediglich zweipolig auszuführen, wobei vorzugsweise zwischen den Polen der Stromschiene eine konstante Versorgungsspannung anliegt und Signale und/oder Daten von, zu und zwischen elektrischen Einrichtungen hochfrequent auf diese Spannung aufmoduliert werden. Ebenso ist es in einer alternativen Ausführung möglich, einen Pol der elektrischen Energieund/oder Signalübertragungseinrichtung, z.B. die Masseverbindung, über das elektrisch leitfähig ausgebildete Schienenprofil zu führen, womit bei der elektrischen Energie- und/oder Signalübertragungseinrichtung ein Pol eingespart werden kann.

Die Erfindung wird nun anhand der in den Figuren 1-4 dargestellten Ausführungsbeispiele sowie weiterer Beispiele in den Figuren 5-9 näher erläutert. Dabei zeigt
- **Figur 1**: eine Frontansicht einer zweiflügeligen Drehtüranlage, wobei die beiden Drehtürflügel mit Gleitarmtürschließer ausgerüstet sind und jeweils über eine in der Gleitschiene angeordnete Feststelleinrichtung verfügen;
- **Figur 2**: einen Schnitt entlang der Linie II-II in Figur 1;
- **Figur 3**: eine Detailansicht des Details III der elektrischen Energie- und/oder Signalübertragungseinrichtung innerhalb der Schiene aus Figur 2;
- **Figur 4**: eine Draufsicht einer elektrischen Energie- und/oder Signalübertragungseinrichtung;
- **Figur 5**: eine Frontansicht einer zweiflügligen Schiebetüranlage mit automatischem Antrieb;
- **Figur 6**: einen Schnitt entlang der Linie IV-IV in Figur 5;
- **Figur 7**: einen Schnitt entlang der Linie V-V in Figur 5;
- **Figur 8**: einen Schnitt durch ein Schienenprofil eines gegenüber Figur 5 bis 7 abgewandeltes Beispiels;
- **Figur 9**: einen Schnitt durch ein Schienenprofil eines weiteren gegenüber Figur 5 bis 7 abgewandeltes Ausführungsbeispiels.

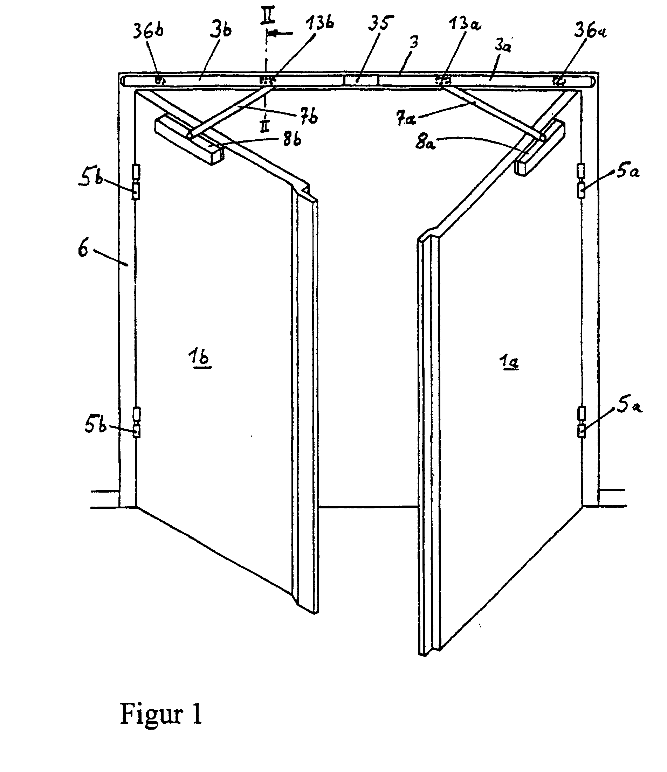

**Figur 1** zeigt in schematischer Darstellung eine zweiflüglige Drehtür mit einem unterschlagenden Standflügel 1a und einem überschlagenden Gangflügel 1b in teilweise geöffneter Stellung. Die Drehflügel 1a, 1b sind in den Scharnieren 5a, 5b, die am ortsfesten Türrahmen 6 angeordnet sind, um die vertikale Achse drehbar gelagert. Im oberen Bereich des Standflügels 1a ist ein Türschließer 8a flügelfest angeordnet, im oberen Bereich des Gangflügels 1b ein weiterer Türschließer 8b in entsprechender Weise. Die Abtriebswelle des am Standflügel 1a angeordneten Türschließers 8a ist drehfest mit dem einen Ende eines kraftübertragenden Gestänges 7a verbunden, dessen anderes Ende mit einem Gleiter 13a drehbar verbunden ist. Der Gleiter 13a ist horizontal verschiebbar in einem Abschnitt 3a der ortsfest im oberen Bereich des Türrahmen 6 angeordneten Schiene 3 geführt. Die Abtriebswelle des am Gangflügel 1b angeordneten Türschließers 8b ist in entsprechender Weise drehfest mit dem einen Ende eines weiteren kraftübertragenden Gestänges 7b verbunden, dessen anderes Ende mit einem Gleiter 13b drehbar verbunden ist, welcher in einem weiteren Anschnitt 3b der ortsfest im oberen Bereich des Türrahmen 6 angeordneten Schiene 3 geführt ist.

Die Schiene 3 besteht aus zwei Teilen 3a, 3b. Zwischen der linken Hälfte 3b und der rechten Hälfte 3a der Schiene 3 ist der Rauchmelder 35 angeordnet. Alternativ kann die Schiene 3 auch als durchgehende Gleitschiene 3 ausgebildet sein und der Rauchmelder 35 in der Gleitschiene 3 oder auf der Gleitschiene 3 angeordnet sein.

Innerhalb der Schiene 3 sind elektrische Feststelleinrichtungen 36a, 36b angeordnet, die in Offenstellung der Flügel 1a, 1b die Bewegung der Gleiter 13a, 13b in Schließrichtung, d.h. zur Mitte der Schiene 3 hin, blockieren. Hierdurch werden die dazugehörigen Flügel 1a, 1b jeweils in geöffneter Stellung arretiert. Zum Schließen der Flügel 1a, 1b wird die Bestromung der Feststellvorrichtungen 13a, 13b aufgehoben und/oder ein Auslöseimpuls an die Feststellvorrichtungen 13a, 13b gegeben, so dass die Feststelleinrichtungen 36a, 36b jeweils die Gleiter 13a, 13b freigeben und sodann eine selbsttätige Schließung des jeweiligen Flügels 1a, 1b unter Wirkung des dazugehörigen Türschließers 8a, 8b erfolgt. Die Auslösung der Feststellvorrichtungen 13a, 13b kann beispielsweise durch ein Signal des Rauchmelders 35 oder auch durch manuelle Betätigung eines Schalters erfolgen.

Selbstverständlich ist auch eine derartige, hier nicht gezeigte Ausführung einer einflügeligen Tür mit einer Gleitschiene 3, einer Feststellvorrichtung 36 und eventuell einem an die Gleitschiene 3 anschließend oder entfernt angeordnetem Rauchmelder 35 denkbar.

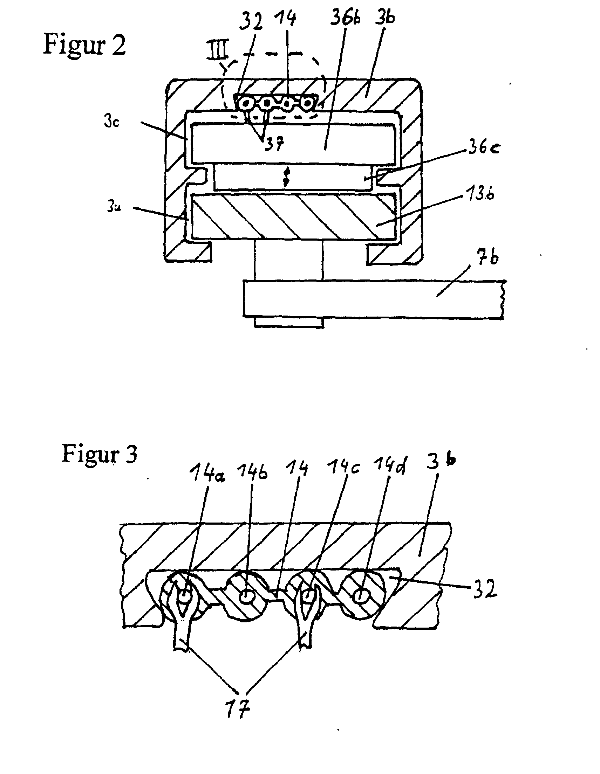

**Figur 2** zeigt einen Schnitt entlang der Linie II-II in Figur 1 durch das Schienenprofil 3b, in dem der Gleiter 13b, der über ein Drehgelenk mit dem kraftübertragenden Gestänge 7b verbunden ist, horizontal verschiebbar geführt ist. Das Schienenprofil 3b weist eine obere Profilkammer 3o und eine untere Profilkammer 3u auf, wobei an den Innenwänden der senkrechten Schenkel des Schienenprofils 3b Stege angeformt sind und die Stege die Trennung zwischen oberer Profilkammer 3o und unterer Profilkammer 3u definieren. Die obere Kammer 3o nimmt die Feststelleinrichtung 36b auf, während in der unteren Kammer 3u der Gleiter 13b geführt ist.

In alternativen, hier nicht gezeigten Ausführungsbeispielen sind auch Schienenprofile mit nur einer Kammer oder mit mehr als zwei Kammern denkbar.

In der Innenwandung im Deckenbereich der oberen Kammer 3o des Schienenprofils 3b ist in einer Profilaussparung 32 die elektrische Energie- und/oder Signalübertragungseinrichtung angeordnet. Die Energie- und/oder Signalübertragungseinrichtung, die als mehradrige Flachbandleitung 14 ausgeführt ist, untergreift die als Hinterschneidung ausgebildete Profilaussparung und klemmt somit fest. Alternativ oder zusätzlich können für die Leitung 14 auch andere Befestigungsmethoden, z.B. eine Verklebung oder ein Vergießen mit dem Schienenprofil 3b, vorgesehen sein. Über das Flachbandkabel 14 werden elektrische Einrichtungen, hier beispielsweise der Feststeller 36b und der Rauchmelder 35, die in oder an dem Schienenprofil 3b angeordnet sind, mit elektrischer Energie und/oder mit elektrischen Signalen versorgt. Die Verbindung zwischen Flachbandkabel 14 und der/den elektrischer Einrichtung(en) erfolgt über flexible mehradrige elektrische Leitung(en) 37. Die externe elektrische Energie- und/oder Signalübertragung zur Flachbandleitung 14 erfolgt beispielsweise an einem Ende der Schiene 3b durch elektrische Verbindung der Leitung 14 mit einer elektrischen Energiequelle oder einer Steuerzentrale, die in die Schiene 3b integriert sein kann oder außerhalb der Schiene 3b angeordnet ist.

Der Feststeller 36b ist in der oberen Kammer 3o des Schienenprofils 3b an einer einem bestimmten Türöffnungswinkel zugeordneten Position angeordnet. Zur Arretierung des Flügels 1b in Offenstellung kann über eine nicht dargestellte Steuerungseinheit ein elektrischer Aktor, beispielsweise ein Elektromagnet, aktiviert werden, der das im unteren Teil des Feststellers 36b vertikal beweglich geführte Stopperelement 36c in die untere Kammer 3u des Schienenprofils in die Bewegungsbahn des Gleiters 13b bewegt. Das Stopperelement bildet somit in ausgefahrenem Zustand einen Anschlag für den Gleiter 13b und blockiert die durch den Türschließer 8b angetriebene Bewegung des Gleiters 13b in Schließrichtung.

Die Schiene 3b kann zusammen mit der montierten elektrischen Energieund/oder Signalübertragungseinrichtung bedarfsgemäß abgelängt werden und ist somit an unterschiedliche Montagebedingungen anpassbar.

**Figur 3** zeigt eine Detailansicht des Ausschnitts III aus Figur 2. Die Flachbandleitung 14 besteht aus vier parallel verlaufenden und über den elektrisch isolierenden Kabelmantel miteinander verbundenen Einzelleitern 14a, 14b, 14c, 14d. Jeder Einzelleiter 14a, 14b, 14c, 14d ist elektrisch durch den ihn umhüllenden Kabelmantel gegen die anderen Einzelleiter 14a, 14b, 14c, 14d sowie gegen das Schienenprofil 3b isoliert. Die Flachbandleitung 14 ist in der hinterschnittenen Aussparung 32 im oberen Teil des Profilquerschnitts der Schiene 3b angeordnet. Durch den Hinterschnitt 32 verrastet die Flachbandleitung im Profil 3b. Alternativ oder zusätzlich kann die Flachbandleitung 14 mit dem Profil 3b verklebt oder zumindest teilweise in das Profil 3b eingegossen werden.

Die über das Flachbandkabel 14 versorgte elektrischen Einrichtungen sind mittels selbstschneidender Kontaktschneiden 17, sogenannter Schneidkopf-Kontaktstiften, elektrisch mit den Einzelleitern 14a, 14b, 14c, 14d der Flachbandleitung 14 verbunden. Die Kontaktschneiden 17 sind elektrisch leitend mit flexiblen Kabeln 37 verbunden, über die die elektrische Energie und/oder die elektrischen Signale zu der jeweiligen elektrischen Einrichtung zugeführt wird bzw. werden. In einer anderen erfindungsgemäßen Ausführung sind federnd gelagerte Kontaktschneiden 17 auf den elektrischen Einrichtungen in definierten Positionen so angeordnet und beispielsweise in einem Steckergehäuse so geführt, dass sie bei der Montage der elektrischen Einrichtungen in definierter Ausrichtung gegen das Flachbandkabel 14 gedrückt werden, den Kabelmantel durchschneiden und sich elektrisch leitend an den ihrer Position entsprechenden Einzelleiter 14a, 14b, 14c, 14d anlegen. Die federnde Lagerung der Kontaktschneiden 17 bewirkt einen zuverlässigen Kontakt mit dem Leiter 14. Vorteilhafterweise ist die Isolierung aus einem elastischen, gummiartigen Material ausgebildet, so dass nach dem Entfernen einer elektrischen Komponente 35, 36b, 38b die verbleibenden Kontaktierlöcher durch die elastische Isolierung wieder verschlossen werden.

Jeder Einzelleiter 14a, 14b, 14c, 14d des Kabels 14 ist zur Versorgung einer bestimmten elektrischen Einrichtung spezifisch zugeordnet. Der Einzelleiter 14a dient als gemeinsame Masseverbindung aller an die elektrische Energieund/oder Signalübertragungseinrichtung angeschlossenen elektrischen Einrichtungen. Beispielsweise versorgt der Einzelleiter 14b den Feststeller 36b für den Flügel 1b; Leiter 14c versorgt einen Mikroschalter 38b zur Detektierung einer bestimmten Flügelstellung und Leiter 14d einen Rauchmelder 35. Diese elektrischen Einrichtungen sind an unterschiedlichen Positionen entlang der Schiene 3b angeordnet und können außerhalb oder innerhalb der Schiene 3b angebracht sein.

Die Anordnung der Figuren 2 und 3, welche einen Schnitt im Bereich des linken Abschnitts 3b der Schiene 3 zeigt, lässt sich selbstverständlich auch auf den entsprechenden Abschnitt 3a der Schiene 3 übertragen; ebenso sind einflügelige Türanlagen denkbar, welche ebenfalls mit einer derartig ausgebildeten Schiene 3 versehen sind.

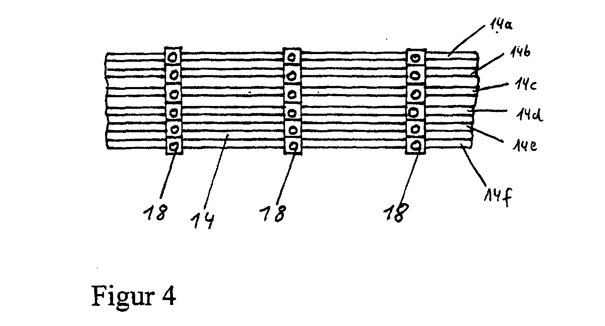

**Figur 4** zeigt in schematischer Darstellung eine Ansicht von unten auf die Flachbandleitung 14 mit einem gegenüber dem Ausführungsbeispiel aus Figur 3 alternativen Kontaktierungsprinzip. An der mehrpoligen, hier sechspoligen Flachbandleitung 14 sind mehrpolige, hier 6-polige Buchsen 18 oder Steckverbinder in regelmäßigen Abständen, z.B. alle 20 cm, angeordnet. Jeder Pol der Buchse 18 ist mit der dazugehörigen Ader des Flachbandkabels 14 elektrisch leitend verbunden.

Die elektrische Energie- und/oder Signalübertragung zu den elektrischen Komponenten erfolgt durch mehrpolige, z.B. 6-polige Stecker, die auf der einen Seite elektrisch leitend mit der jeweiligen elektrischen Komponente, z.B. über ein flexibles Kabel 37, verbunden sind und auf der anderen Seite mit Pins verbunden sind, die in die Buchse 18 eingesteckt werden. Bei den Steckern sind komponentenspezifisch jeweils nur bestimmte Anschlusspins elektrisch leitend angeschlossen, so dass automatisch die richtigen Adern 14a, 14b, 14c, 14d, 14e, 14f der Flachbandleitung 14 kontaktiert werden. Stecker- und Buchsengehäuse sind mit komplementären Ausformungen, z.B. Einkerbungen und Ausbuchtungen, versehen, so dass der Stecker nur in einer bestimmten Orientierung in die Buchse 18 eingesteckt werden kann und damit eine Verpolungssicherung erreicht wird. Der Stecker wird je nach Position der elektrischen Einrichtung in die jeweils nächste benachbarte Buchse 18 eingesteckt.

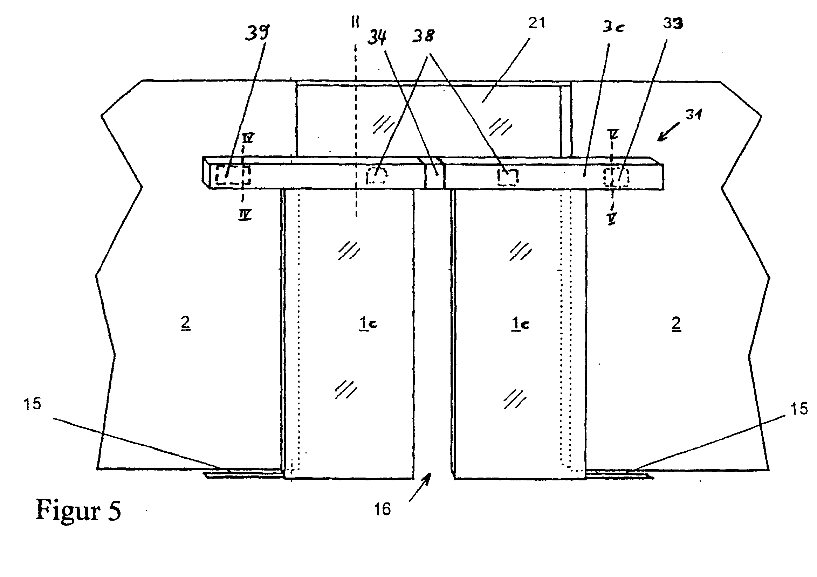

**Figur 5** zeigt in schematischer Darstellung eine zweiflüglige Schiebetüranlage mit zwei Schiebeflügeln 1c, die als parallel bewegliche Glasscheibenflügel ausgeführt sind. Die Flügel 1c, die hier in teilweise geöffneter Position dargestellt sind, sind horizontal beweglich in einer Lauf- oder Gleitschiene 3c - im folgenden Schiene 3c genannt - geführt, indem sie an in der Schiene 3c linear verschiebbar geführten, hier nicht dargestellten Rollenwagen aufgehängt sind. Zur Stabilisierung der Führung können die Flügel 1c untenseitig zusätzlich in einer Bodenführung 15 geführt sein. Oberhalb des Durchgangsbereichs 16 befindet sich ein Oberlicht 21.

Die Schiene 3c kann als quaderförmiges Profil ausgebildet sein, wobei alternativ auch L-, U-, T-, H- oder C-förmige oder weitere Profilarten denkbar sind.

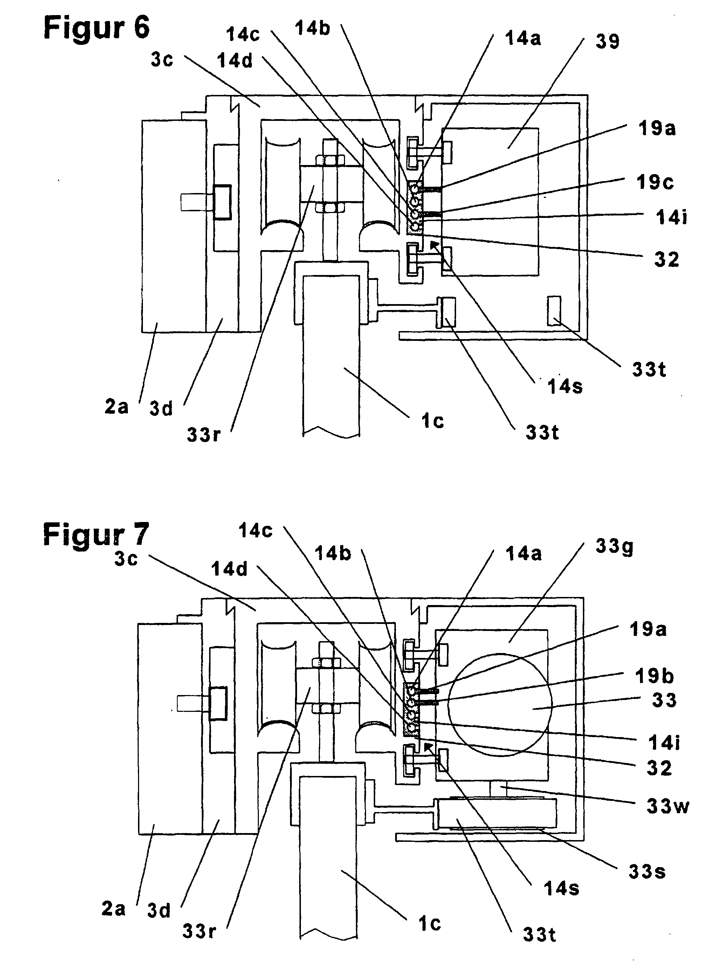

Der Antrieb der Flügel 1c erfolgt elektrisch über den Schiebetürantrieb 31. Das Gehäuse des Schiebetürantriebs 31 weist ein Befestigungsprofil 3d, ein Laufschienenprofil 3c und eine Abdeckhaube auf, wobei die Länge des Befestigungsprofils 3d und des Laufschienenprofils 3c sowie der Abdeckhaube jeweils identisch sind. Zur Aufnahme des Laufschienenprofils 3c weist das Befestigungsprofil 3d eine Einhängevorrichtung auf. Die Montage des Laufschienenprofils 3c an dem Befestigungsprofil 3d erfolgt durch Einhängen und Verspannen an der, an den einander zugewandten Frontseiten der Profile angeordneten Klemmvorrichtung. Durch Befestigungsschrauben wird das Befestigungsprofil 3d an dem bauseitigen Träger 2a verschraubt. In der gleichen Weise wird die Abdeckhaube an dem Laufschienenprofil 3c befestigt, so dass das Befestigungsprofil 3d, das Laufschienenprofil 3c und die Abdeckhaube einen zusammengesetzten quaderförmigen Körper mit fluchtenden Außenseiten bilden. Innerhalb des Laufschienenprofils 3c ist die Laufschiene angeformt. Die Laufschiene führt die Rollenwagen 33r und weist hierzu zwei einander in einer horizontaler Ebene gegenüberliegende Laufflächen auf, auf denen die Laufrollen der Rollenwagen 33r abrollen. Vorzugsweise sind mehrere Laufrollen in Laufrichtung hintereinander angeordnet. An den Rollenwagen 33r sind die Schiebeflügel 1c mittels einer Aufhängeund Justiereinrichtung justierbar gehaltert. Die Schiebeflügel 1c sind fluchtend unter den Rollenwagen 33r aufgehängt und greifen mit ihrer horizontalen Oberkante je nach Einstellung der Aufhänge- und Justiereinrichtung mehr oder weniger weit in das Laufschienenprofil 3c ein. Frontseitig an das Laufschienenprofil 3c anschließend ist ein Aufnahmeraum angeordnet. In einer horizontalen Ebene des Aufnahmeraums ist eine herkömmliche, über Umlenkrollen geführte Treibriemeneinrichtung 33t, welche eine mit dem Schiebeflügel 1c zu dessen Antrieb zusammenwirkende Mitnehmereinrichtung aufweist, angeordnet. Die Mitnehmereinrichtung greift unter dem seitlichen Laufschienenprofil hindurch in die Schiebeflügelebene ein und ist einerseits an der Aufhänge- und Justiereinrichtung und andererseits an einem umlaufenden Trum der Treibriemeneinrichtung befestigt. Im Aufnahmeraum ist in der Schnittdarstellung des Ausführungsbeispiels gemäß Figur 6 die elektrischen Steuerungseinrichtung 39 angeordnet. Die Schiene 3c weist zwei hinterschnittene Nuten auf, wobei in den Nuten verschiebbare Nutensteine gehaltert sind. Die elektrischen Komponenten, hier die Steuerungseinrichtung 39, weist in die Nutensteine eingreifende Schrauben zur lösbaren und justierbaren Befestigung auf. In derselben Weise ist in der in Figur 7 gezeigten Schnittdarstellung des Ausführungsbeispiels der Antriebsmotor 33 mit dem dazugehörigen Getriebe 33g am Schienenprofil 3c montiert. In dem Getriebe ist eine als Getriebe-Abtriebswelle ausgebildete Welle 33w mit senkrechter Drehachse gelagert, welche eine Riemenscheibe 33s trägt und über diese den Treibriemen 33r antriebt. Ferner sind (hier nicht dargestellte) Mikroschalter zur Erfassung der Flügel-Endlagen an der Schiene 3c montiert, wobei jedoch die Erfassung der Flügelbewegung alternativ oder zusätzlich auch über inkrementale Wegerfassungseinrichtungen oder dergleichen erfolgen kann. In der Mitte der Schiene 3c ist eine Sensoreinrichtung, in diesem Fall ein Bewegungsmelder 34, angeordnet.

An dem Profil der Schiene 3c ist - wie in den Beispielen der **Figuren 6** bis **9** ersichtlich - eine elektrische Energie- und/oder Signalübertragungseinrichtung vormontiert. Sie ist als mehrpolige, hier vierpolige Stromschiene 14s ausgebildet, wobei die einzelnen Leiter 14a, 14b, 14c, 14d der Stromschiene 14s in einem elektrisch isolierendem Körper 14i aufgenommen sind. Der Isolator 14i ist in einer Aussparung 32 des Schienenprofils 3c aufgenommen, beispielweise durch Verklebung und/oder Verklemmung, wobei jedoch auch andere Befestigungsarten möglich sind. Durch den Isolator 14i sind die einzelnen Leiter 14a, 14b, 14c, 14d der Stromschiene 14s gegeneinander sowie gegenüber der Schiene 3c elektrisch isoliert und außerdem formstabil gehaltert. Zum Anschluss der mit den Leitern 14a, 14b, 14c, 14d korrespondierenden Kontaktstifte 19a, 19b, 19c, 19d weist der Isolator 14i im Bereich jedes Leiters je eine nach außen offene Nut auf, welche sich vorzugsweise über die gesamte Länge des jeweiligen Leiters 14a, 14b, 14c, 14d erstreckt, um den jeweiligen Kontaktstift 19a, 19b, 19c, 19d an beliebiger Position aufzunehmen. Hierdurch wird es ermöglicht, die Montageposition der elektrischen Komponenten 33, 34, 38, 39 je nach den örtlichen Gegebenheiten an beliebiger Stelle an oder in dem Schienenprofil 3c zu wählen.

Alternativ kann vorgesehen sein (hier nicht gezeigt), anstelle der direkten Anordnung der Kontaktstifte 19a, 19b, 19c, 19d an der jeweiligen elektrischen Komponente 33, 34, 38, 39 eine Steckereinrichtung vorzusehen, wobei der Stecker, der über eine elektrische Leitung 37 mit der jeweiligen elektrischen Komponente 33, 34, 38, 39 verbunden ist, die jeweiligen Kontaktstifte 19a, 19b, 19c, 19d enthält und vorzugsweise verpolungssicher ausgebildet ist. Außerdem sind weitere Kontaktierungsarten zwischen der Stromschiene 14s und den elektrischen Komponenten 33, 34, 38, 39 möglich (hier ebenfalls nicht gezeigt), z.B. Schraubverbindungen und/oder Steckverbindungen mit zusätzlichen Buchsen und/oder Steckern an und/oder in der Stromschiene.

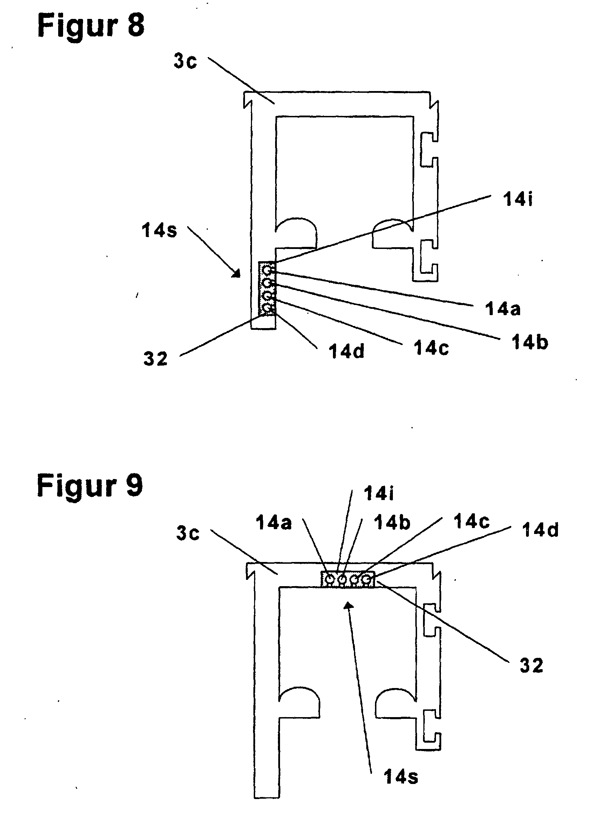

Die Montageposition der vormontierten Stromschiene 14s kann, wie in den **Figuren 8** und **9** gezeigt, an verschiedenen Bereichen des Schienenprofils 3c angeordnet sein, z.B. unterhalb der Laufbahnen des Schienenprofils 3c (Figur 8) oder innerhalb der den Rollenwagen 33r aufnehmenden Kammer (Figur 9). Ferner kann die Stromschieneneinrichtung 14s auch ohne in eine Aussparung 32 einzugreifen am Schienenprofil 3c montiert sein, z.B. durch Verkleben.

Alternativ kann die elektrische Energie- und/oder Signalübertragung - wie in den vorhergehenden Ausführungsbeispielen - anstelle der Stromschieneneinrichtung 14s ein mehrpoliges Flachbandkabel 14 aufweisen, das in oder an einer Wandung der Schiene 3c angeordnet ist (hier nicht gezeigt). Über die elektrische Energie- und/oder Signalübertragungseinrichtung werden über Schneidkopf-Kontaktstifte 17 oder Buchsen-Stecker-Verbindungen 18 elektrische Anschlüsse zu den in der Schiene 3c angeordneten elektrischen Komponenten hergestellt.

Die von der Sensoreinrichtung 34 ausgehenden Signale werden ebenfalls über die Stromschieneneinrichtung 14s und/oder über die Flachbandkabeleinrichtung 14 übertragen. Wenn die Sensoreinrichtung 34 ein Hindernis im Gefährdungsbereich der Flügelschließkanten detektiert, so wird die Schließbewegung der Flügel 1c angehalten und/oder reversiert.

In den Ausführungsbeispielen gemäß der Figuren 1 bis 4 sowie in den Beispielen gemäß der Figuren 5-9 sind jeweils vier- oder sechspolige Kabelanordnungen 14 bzw. Stromschienenanordnungen 14s gezeigt. Die Anzahl der Pole richtet sich nach der Anzahl und/oder Art der anzuschließenden elektrischen Komponenten 31, 33, 34, 35, 36, 38, 39, so dass prinzipiell alle Polzahlen möglich sind, sofern die Platzverhältnisse dies zulassen. So ist es z.B. möglich (hier nicht gezeigt), insbesondere bei Anordnungen ähnlich Figur 6 bis 9, die Kabelanordnung 14 bzw. die Stromschienenanordnung 14s lediglich zweipolig auszuführen, wobei vorzugsweise zwischen den Polen der Kabelanordnung bzw. der Stromschiene 14s eine konstante Versorgungsspannung anliegt und die Signale und/oder Daten von, zu und zwischen elektrischen Einrichtungen 31, 33, 34, 38, 39 hochfrequent auf diese Spannung aufmoduliert werden. Ebenso ist es in alternativen Ausführungen möglich (hier nicht gezeigt), einen Pol der elektrischen Energie- und/oder Signalübertragungseinrichtung, z.B. die Masseverbindung, über das elektrisch leitfähig ausgebildete Schienenprofil 3, 3a, 3b, 3c zu führen, womit bei der elektrischen Energie- und/oder Signalübertragungseinrichtung 14, 14s ein Pol eingespart werden kann.

### Verzeichnis der Referenzzeichen

- 1a: (Stand-) Flügel
- 1b: (Gang-) Flügel
- 1c: Schiebeflügel
- 2: Wand, Gebäudewand
- 2a: Trägerprofil
- 3: Schiene, Schienenprofil
- 3a: Schiene, Schienenprofil
- 3b: Schiene, Schienenprofil
- 3c: Schiene, Schienenprofil
- 3d: Befestigungsprofil
- 3o: Profilkammer
- 3u: Profilkammer
- 5a: Scharnier
- 5b: Scharnier
- 6: Türrahmen
- 7a: kraftübertragendes Gestänge
- 7b: kraftübertragendes Gestänge
- 8a: Türschließer
- 8b: Türschließer
- 13a: Gleiter des Standflügels
- 13b: Gleiter des Gangflügels
- 14: Flachbandleitung, Flachbandkabel
- 14a: Einzelleiter der Flachbandleitung / Stromschiene
- 14b: Einzelleiter der Flachbandleitung / Stromschiene
- 14c: Einzelleiter der Flachbandleitung / Stromschiene
- 14d: Einzelleiter der Flachbandleitung / Stromschiene
- 14e: Einzelleiter der Flachbandleitung / Stromschiene
- 14f: Einzelleiter der Flachbandleitung / Stromschiene
- 14i: Isolator
- 14s: Stromschiene
- 15: Bodenführung
- 16: Durchgangsbereich
- 17: Kontaktschneiden, Schneidkopf-Kontaktstift
- 18: Buchse
- 19a: Kontaktstift
- 19b: Kontaktstift
- 19c: Kontaktstift
- 19d: Kontaktstift
- 21: Oberlicht
- 31: Schiebetürantrieb
- 32: Aussparung in der Schiene
- 33: Antriebsmotor
- 33g: Getriebe
- 33r: Rollenwagen
- 33s: Riemenscheibe
- 33t: Treibriemen
- 33w: Welle
- 34: Sensoreinrichtung, Bewegungsmelder
- 35: Rauchmelder
- 36a: Feststeller
- 36b: Feststeller
- 36c: Stopperelement
- 37: elektrische Leitung
- 38a: Mikroschalter
- 38b: Mikroschalter
- 39: Steuerungseinheit mit Netzteil

## Patentansprüche

1. Tür mit einer Schieneneinrichtung, enthaltend:
eine Schiene (3, 3a, 3b) und einen in der Schiene (3, 3a, 3b) geführten Gleitarm (7a, 7b) eines kraftübertragenden Gestänges eines Antriebs (8a, 8b) der Tür, wobei die Schiene (3, 3a, 3b) an einem ortsfesten Rahmen (6) der Tür angeordnet ist und der Gleitarm (7a, 7b) einerseits in der Schiene (3, 3a, 3b) geführt und andererseits an einem Flügel (1a, 1b) der Tür abgestützt ist und wobei in oder an der Schiene (3, 3a, 3b) mindestens eine elektrische Einrichtung angeordnet ist, z.B. eine mit dem Gleitarm (7a, 7b) zusammenwirkende Feststellvorrichtung (36a, 36b) und/oder eine Sensoreinrichtung (34, 35), z.B. Rauchmelder (35),
wobei innerhalb eines Gehäuses oder anschließend an ein Gehäuse der Schiene (3, 3a, 3b) und/oder an dem Profilträger der Schiene (3, 3a, 3b) eine in oder an einer Wandung des Gehäuses bzw. des Profilträgers vormontierte, als Kabeleinrichtung (14) und/oder Stromschiene (14s) ausgebildete elektrische Energie- und/oder Signalübertragungseinrichtung angeordnet ist, an die die elektrische Einrichtung (34, 35, 36, 38, 39) zur Versorgung mit elektrischer Energie und/oder mit elektrischen Signalen anschließbar ist, und wobei die elektrische Energie- und/oder Signalübertragungseinrichtung (14, 14s) zumindest abschnittsweise unbewegbar in oder an dem Gehäuse der Schiene (3, 3a, 3b) montiert angeordnet ist, **dadurch gekennzeichnet, dass** die elektrische Energie- und/oder Signalübertragungseinrichtung (14, 14s) so ausgebildet ist, dass die elektrische Einrichtung (34, 35, 36, 38, 39) durch Anstecken an beliebiger Stelle bzw. an mehreren Stellen entlang der Energie- und/oder Signalübertragungseinrichtung anschließbar ist.

2. Tür mit einer Schieneneinrichtung nach Anspruch 1,
**dadurch gekennzeichnet, dass** die elektrische Energieund/oder Signalübertragungseinrichtung (14, 14s) in einem als Aussparung (32) des Schienenprofils (3, 3a, 3b) ausgebildeten, vorzugsweise hinterschnittenen Aufnahmeraum (32) aufgenommen ist, wobei vorzugsweise vorgesehen ist, dass sich der Aufnahmeraum (32) über - zumindest annähernd - die gesamte Länge des Schienenprofils (3, 3a, 3b) erstreckt.

3. Tür mit einer Schieneneinrichtung nach Anspruch 2,
**dadurch gekennzeichnet, dass** der Aufnahmeraum (32) des Schienenprofils (3, 3a, 3b) so ausgebildet ist, dass eine kraft- und/oder formschlüssige Verbindung zwischen dem Aufnahmeraum (32) und der elektrischen Energie- und/oder Signalübertragungseinrichtung (14, 14s) erfolgt.

4. Tür mit einer Schieneneinrichtung nach Anspruch 1,
**dadurch gekennzeichnet, dass** die elektrische Energieund/oder Signalübertragungseinrichtung (14, 14s) unmittelbar auf dem Schienenprofil (3, 3a, 3b) aufliegend montiert angeordnet ist.

5. Tür mit einer Schieneneinrichtung nach Anspruch 1,
**dadurch gekennzeichnet, dass** die elektrische Energieund/oder Signalübertragungseinrichtung (14, 14s) mittelbar über eine Befestigungseinrichtung auf dem Schienenprofil (3, 3a, 3b) aufliegend montiert angeordnet ist.

6. Tür mit einer Schieneneinrichtung nach Anspruch 5,
**dadurch gekennzeichnet, dass** die Befestigungseinrichtung für die elektrische Energie- und/oder Signalübertragungseinrichtung (14, 14s) auf dem Schienenprofil (3, 3a, 3b) lösbar montiert ist, wobei vorzugsweise vorgesehen ist, dass die Befestigungseinrichtung eine Rasteinrichtung und/oder eine lösbare Hafteinrichtung und/oder eine permanentmagnetische Einrichtung und/oder eine Verschraubungseinrichtung oder dergleichen aufweist.

7. Tür mit einer Schieneneinrichtung nach Anspruch 5,
**dadurch gekennzeichnet, dass** sich die Befestigungseinrichtung für die elektrische Energie- und/oder Signalübertragungseinrichtung (14, 14s) über die gesamte Länge des Schienenprofils (3, 3a, 3b) oder über Abschnitte des Schienenprofils (3, 3a, 3b) erstreckt.

8. Tür mit einer Schieneneinrichtung nach Anspruch 5,
**dadurch gekennzeichnet, dass** die Befestigungseinrichtung für die elektrische Energie- und/oder Signalübertragungseinrichtung (14, 14s) als elektrischer Isolator (14i) ausgebildet ist.

9. Tür mit einer Schieneneinrichtung nach Anspruch 5,
**dadurch gekennzeichnet, dass** die Befestigungseinrichtung für die elektrische Energie- und/oder Signalübertragungseinrichtung (14, 14s) so ausgebildet ist, dass eine kraft- und/oder formschlüssige Verbindung zwischen der Befestigungseinrichtung und der elektrischen Energieund/oder Signalübertragungseinrichtung (14, 14s) erfolgt.

10. Tür mit einer Schieneneinrichtung nach Anspruch 1,
**dadurch gekennzeichnet, dass** die Kabeleinrichtung (14) als Flachbandleitung mit nebeneinander angeordneten Adern (14a, 14b, 14c, 14d, 14e, 14f) ausgebildet ist.

11. Tür mit einer Schieneneinrichtung nach Anspruch 1,
**dadurch gekennzeichnet, dass** die elektrische Verbindung zwischen der elektrischen Energie- und/oder Signalübertragungseinrichtung (14, 14s) und der elektrischen Einrichtung (34, 35, 36, 38, 39) über an der elektrischen Energie- und/oder Signalübertragungseinrichtung (14, 14s) angreifende Schneidkopf-Kontaktstifte (17) ausgebildet ist.

12. Tür mit einer Schieneneinrichtung nach Anspruch 1,
**dadurch gekennzeichnet, dass** die elektrische Verbindung zwischen der elektrischen Energie- und/oder Signalübertragungseinrichtung (14, 14s) und der elektrischen Einrichtung (34, 35, 36, 38, 39) über Buchsen-Steckerverbindung (18) ausgebildet ist.

13. Tür mit einer Schieneneinrichtung nach Anspruch 1,
**dadurch gekennzeichnet, dass** die elektrische Verbindung zwischen der elektrischen Energie- und/oder Signalübertragungseinrichtung (14, 14s) und der elektrischen Einrichtung (34, 35, 36, 38, 39) über Schleifer ausgebildet ist.

14. Tür mit einer Schieneneinrichtung nach Anspruch 1,
**dadurch gekennzeichnet, dass** die elektrische Verbindung zwischen der elektrischen Energie- und/oder Signalübertragungseinrichtung (14, 14s) und der elektrischen Einrichtung (34, 35, 36, 38, 39) über federnde Kontaktstifte (19a, 19b, 19c, 19d) ausgebildet ist.

15. Tür mit einer Schieneneinrichtung nach Anspruch 1,
**dadurch gekennzeichnet, dass** die Kabeleinrichtung (14) in Abständen, vorzugsweise in Rasterabständen, elektrisch mit Buchsen (18) verbunden ist, wobei vorzugsweise vorgesehen ist, dass in die Buchsen (18) eineindeutig einsteckbare, verpolungssichere Steckerverbindungen vorhanden sind, die die elektrische Einrichtung (34, 35, 36, 38, 39) mit elektrischer Energie und/oder mit elektrischen Signalen versorgen.

16. Tür mit einer Schieneneinrichtung nach Anspruch 15,
**dadurch gekennzeichnet, dass** jeder Kontakt einer Buchse (18) elektrisch mit einen dazugehörigen Leiter (14a, 14b, 14c, 14d, 14e, 14f) der Kabeleinrichtung (14) verbunden ist.

17. Tür mit einer Schieneneinrichtung nach Anspruch 1,
umfassend einen ersten Flügel (1a), der mit einem ersten Antrieb (8a) ausgestattet ist, und einen zweiten Flügel (1b), der mit einem zweiten Antrieb (8b) ausgestattet ist,
**dadurch gekennzeichnet, dass** in dem Gehäuse, vorzugsweise Profilgehäuse, der Schieneneinrichtung (3) eine erste Schiene (3a) und eine zweite Schiene (3b) axial hintereinander angeordnet sind, wobei in oder an der ersten Schiene (3a) der Gleitarm (7a) des ersten Antriebs (8a) verschiebbar geführt ist und in oder an der zweiten Schiene (3b) der Gleitarm (7b) des zweiten Antriebs (8b) verschiebbar geführt ist und in oder an dem Gehäuse, vorzugsweise innerhalb des Gehäuses oder im Anschluss an das Gehäuse, der Rauchmelder (35) angeordnet ist, der an der elektrischen Energie- und/oder Signalübertragungseinrichtung (14, 14s) elektrisch angeschlossen ist.

18. Tür mit einer Schieneneinrichtung nach Anspruch 17,
**dadurch gekennzeichnet, dass** die elektrische Einrichtung, insbesondere der Rauchmelder (35), die Feststelleinrichtung (36a, 36b), zwischen der ersten Schiene (3a) und der zweiten Schiene (3b) angeordnet ist.

19. Tür mit einer Schieneneinrichtung nach Anspruch 17,
**dadurch gekennzeichnet, dass** eine mit dem Führungsende des Gleitarms (7a, 7b) zusammenwirkende Feststelleinrichtung (36a, 36b) im Bereich der Schiene (3a, 3b), vorzugsweise innerhalb des Gehäuses der Schiene (3a, 3b) angeordnet ist, vorzugsweise die erste Feststelleinrichtung (36a) im Bereich der ersten Schiene (3a) und die zweite Feststelleinrichtung (36b) im Bereich der zweiten Schiene (3b).

20. Tür mit einer Schieneneinrichtung nach Anspruch 17,
**dadurch gekennzeichnet, dass** im Bereich der Schiene (3a, 3b), vorzugsweise mit vorbestimmtem Abstand von der Feststelleinrichtung (36a, 36b), ein Mikroschalter (38a, 38b) angeordnet ist, der mit dem Führungsende des Gleitarms (7a, 7b) zusammenwirkt, um die Flügelposition zu erfassen, wobei der Mikroschalter (38a, 38b) an der elektrischen Energieund/oder Signalübertragungseinrichtung (14, 14s) elektrisch angeschlossen ist.

21. Tür mit einer Schieneneinrichtung nach Anspruch 17,
**dadurch gekennzeichnet, dass** es sich bei dem Antrieb um einen Türschließer (8a, 8b) mit Schließerfeder handelt, die beim manuellen oder motorischen Öffnen des Türschließers (8a, 8b) geladen wird und sodann selbsttätig schließt, vorzugsweise mit Dämpfungsvorrichtung für die Öffnungs- und/oder Schließbewegung, z.B. hydraulische Dämpfungsvorrichtung.

## Claims

1. Door with a rail arrangement, containing:
a rail (3, 3a, 3b) and a sliding arm (7a, 7b), guided in the rail (3, 3a, 3b), of a force-transmitting linkage of a drive (8a, 8b) of the door, the rail (3, 3a, 3b) being arranged on a stationary frame (6) of the door, and the sliding arm (7a, 7b), on the one hand, being guided in the rail (3, 3a, 3b) and, on the other hand, being supported on a leaf (1a, 1b) of the door, and at least one electrical arrangement being arranged in or on the rail (3, 3a, 3b), e.g. a securing device (36a, 36b) which interacts with the sliding arm (7a, 7b) and/or a sensor arrangement (34, 35), e.g. smoke detector (35),
it being the case that arranged within a housing or following a housing of the rail (3, 3a, 3b), and/or on the profile carrier of the rail (3, 3a, 3b), is an electrical energy- and/or signal-transmission arrangement which is preassembled in or on a wall of the housing and/or of the profile carrier, which is designed as a cable arrangement (14) and/or busbar (14s) and to which the electrical arrangement (34, 35, 36, 38, 39) can be connected for supplying with electrical energy and/or with electrical signals, and it being the case that the electrical energy- and/or signal-transmission arrangement (14, 14s) is fitted in a non-moveable manner, at least in certain sections, in or on the housing of the rail (3, 3a, 3b),
**characterized in that** the electrical energy- and/or signal-transmission arrangement (14, 14s) is designed such that the electrical arrangement (34, 35, 36, 38, 39) can be connected by plugging in to any desired location or to a plurality of locations along the energy- and/or signal-transmission arrangement.

2. Door with a rail arrangement according to Claim 1,
**characterized in that** the electrical energy- and/or signal-transmission arrangement (14, 14s) is accommodated in a preferably undercut accommodating space (32) which is designed as a recess (32) of the rail profile (3, 3a, 3b), it preferably being provided that the accommodating space (32) extends over - at least more or less - the entire length of the rail profile (3, 3a, 3b).

3. Door with a rail arrangement according to Claim 2,
**characterized in that** the accommodating space (32) of the rail profile (3, 3a, 3b) is designed such that a force-fitting and/or form-fitting connection takes place between the accommodating space (32) and the electrical energy- and/or signal-transmission arrangement (14, 14s).

4. Door with a rail arrangement according to Claim 1,
**characterized in that** the electrical energy- and/or signal-transmission arrangement (14, 14s) is fitted such that it rests directly on the rail profile (3, 3a, 3b).

5. Door with a rail arrangement according to Claim 1,
**characterized in that** the electrical energy- and/or signal-transmission arrangement (14, 14s) is fitted such that it rests on the rail profile (3, 3a, 3b) indirectly via a fastening arrangement.

6. Door with a rail arrangement according to Claim 5,
**characterized in that** the fastening arrangement for the electrical energy- and/or signal-transmission arrangement (14, 14s) is fitted in a releasable manner on the rail profile (3, 3a, 3b), it preferably being provided that the fastening arrangement has a latching arrangement and/or a releasable coupling arrangement and/or a permanent-magnet arrangement and/or a screw-connection arrangement or the like.

7. Door with a rail arrangement according to Claim 5,
**characterized in that** the fastening arrangement for the electrical energy- and/or signal-transmission arrangement (14, 14s) extends over the entire length of the rail profile (3, 3a, 3b) or over sections of the rail profile (3, 3a, 3b).

8. Door with a rail arrangement according to Claim 5,
**characterized in that** the fastening arrangement for the electrical energy- and/or signal-transmission arrangement (14, 14s) is designed as an electrical insulator (14i).

9. Door with a rail arrangement according to Claim 5,
**characterized in that** the fastening arrangement for the electrical energy- and/or signal-transmission arrangement (14, 14s) is designed such that a force-fitting and/or form-fitting connection takes place between the fastening arrangement and the electrical energy- and/or signal-transmission arrangement (14, 14s).

10. Door with a rail arrangement according to Claim 1,
**characterized in that** the cable arrangement (14) is designed as a ribbon cable with coves (14a, 14b, 14c, 14d, 14e, 14f) arranged one beside the other.

11. Door with a rail arrangement according to Claim 1,
**characterized in that** the electrical connection between the electrical energy- and/or signal-transmission arrangement (14, 14s) and the electrical arrangement (34, 35, 36, 38, 39) is formed via cutting-head contact pins (17) which act on the electrical energy- and/or signal-transmission arrangement (14, 14s).

12. Door with a rail arrangement according to Claim 1,
**characterized in that** the electrical connection between the electrical energy- and/or signal-transmission arrangement (14, 14s) and the electrical arrangement (34, 35, 36, 38, 39) is formed via a bush/plug connection (18).

13. Door with a rail arrangement according to Claim 1,
**characterized in that** the electrical connection between the electrical energy- and/or signal-transmission arrangement (14, 14s) and the electrical arrangement (34, 35, 36, 38, 39) is formed via sliders.

14. Door with a rail arrangement according to Claim 1,
**characterized in that** the electrical connection between the electrical energy- and/or signal-transmission arrangement (14, 14s) and the electrical arrangement (34, 35, 36, 38, 39) is formed via resilient contact pins (19a, 19b, 19c, 19d).

15. Door with a rail arrangement according to Claim 1,
**characterized in that** the cable arrangement (14) is connected electrically at spacings, preferably at unit spacings, to bushes (18), it preferably being provided that there are polarized plug connections which can be plugged in a defined manner into the bushes (18) and supply the electrical arrangement (34, 35, 36, 38, 39) with electrical energy and/or with electrical signals.

16. Door with a rail arrangement according to Claim 15, **characterized in that** each contact of a bush (18) is connected electrically to an associated conductor (14a, 14b, 14c, 14d, 14e, 14f) of the cable arrangement (14).

17. Door with a rail arrangement according to Claim 1, comprising a first leaf (1a), which is equipped with a first drive (8a), and a second leaf (1b), which is equipped with a second drive (8b),
**characterized in that** a first rail (3a) and a second rail (3b) are arranged axially one behind the other in the housing, preferably profile housing, of the rail arrangement (3), the sliding arm (7a) of the first drive (8a) being guided in a displaceable manner in or on the first rail (3a), and the sliding arm (7b) of the second drive (8b) being guided in a displaceable manner in or on the second rail (3b), and the smoke detector (35), which is connected electrically to the electrical energy- and/or signal-transmission arrangement (14, 14s), being arranged in or on the housing, preferably within the housing or following the housing.

18. Door with a rail arrangement according to Claim 17, **characterized in that** the electrical arrangement, in particular the smoke detector (35) and/or the securing arrangement (36a, 36b), is arranged between the first rail (3a) and the second rail (3b).

19. Door with a rail arrangement according to Claim 17, **characterized in that** a securing arrangement (36a, 36b), which interacts with the guide end of the sliding arm (7a, 7b), is arranged in the region of the rail (3a, 3b), preferably within the housing of the rail (3a, 3b), preferably the first securing arrangement (36a) being arranged in the region of the first rail (3a) and the second securing arrangement (36b) being arranged in the region of the second rail (3b).

20. Door with a rail arrangement according to Claim 17, **characterized in that** arranged in the region of the rail (3a, 3b), preferably at a predetermined spacing from the securing arrangement (36a, 36b), is a microswitch (38a, 38b) which interacts with the guide end of the sliding arm (7a, 7b) in order to sense the leaf position, the microswitch (38a, 38b) being connected electrically to the electrical energy- and/or signal-transmission arrangement (14, 14s).

21. Door with a rail arrangement according to Claim 17, **characterized in that** the drive is a door closer (8a, 8b) with a closer spring which is charged when the door closer (8a, 8b) is opened in a manual or motor-driven manner, and then closes automatically, preferably with a damping device, e.g. hydraulic damping device, for the opening and/or closing movement.

## Revendications

1. Porte avec un dispositif de rail, comprenant :
un rail (3, 3a, 3b) et, guidé dans le rail (3, 3a, 3b), un bras coulissant (7a, 7b) d'une tringle de transfert de force d'un entraînement (8a, 8b) de la porte, le rail (3, 3a, 3b) étant disposé sur un cadre (6) fixe de la porte et le bras coulissant (7a, 7b) étant guidé d'une part dans le rail (3, 3a, 3b) et étant supporté d'autre part sur un vantail (1a, 1b) de la porte, et au moins un dispositif électrique étant prévu sur ou dans le rail (3, 3a, 3b), par exemple un dispositif de fixation (36a, 36b) coopérant avec le bras coulissant (7a, 7b) et/ou un dispositif de capteur (34, 35), par exemple un détecteur de fumée (35),
un dispositif électrique de transfert d'énergie et/ou de signaux, prémonté dans ou sur une paroi d'un boîtier ou d'un support profilé, réalisé en tant que dispositif à câble (14) et/ou rail conducteur (14s) étant prévu à l'intérieur du boîtier ou se raccordant au boîtier du rail (3, 3a, 3b) et/ou sur le support profilé du rail (3, 3a, 3b), le dispositif électrique (34, 35, 36, 38, 39) pouvant lui être raccordé pour l'alimenter en énergie électrique et/ou en signaux électriques, et
le dispositif électrique de transfert d'énergie et/ou de signaux (14, 14s) étant monté de manière au moins partiellement immobile dans ou sur le boîtier du rail (3, 3a, 3b), **caractérisée en ce que**
le dispositif électrique de transfert d'énergie et/ou de signaux (14, 14s) est réalisé de telle sorte que le dispositif électrique (34, 35, 36, 38, 39) puisse être raccordé par enfichage à un endroit quelconque ou en plusieurs endroits le long du dispositif de transfert d'énergie et/ou de signaux.

2. Porte avec un dispositif de rail selon la revendication 1,
**caractérisée en ce que** le dispositif électrique de transfert d'énergie et/ou de signaux (14, 14s) est reçu dans un espace de logement (32) réalisé sous la forme d'un évidement (32) du profilé du rail (3, 3a, 3b), de préférence en contre-dépouille, l'espace de logement (32) s'étendant de préférence sur au moins approximativement toute la longueur du profilé du rail (3, 3a, 3b).

3. Porte avec un dispositif de rail selon la revendication 2,
**caractérisée en ce que** l'espace de logement (32) du profilé du rail (3, 3a, 3b) est réalisé de telle sorte qu'il en résulte une connexion par force et/ou par crabotage entre l'espace de logement (32) et le dispositif électrique de transfert d'énergie et/ou de signaux (14, 14s).

4. Porte avec un dispositif de rail selon la revendication 1,
**caractérisée en ce que** le dispositif électrique de transfert d'énergie et/ou de signaux (14, 14s) est monté directement en applique contre le profilé du rail (3, 3a, 3b).

5. Porte avec un dispositif de rail selon la revendication 1,
**caractérisée en ce que** le dispositif électrique de transfert d'énergie et/ou de signaux (14, 14s) est monté indirectement en applique contre le profilé du rail (3, 3a, 3b), par le biais d'un dispositif de fixation.

6. Porte avec un dispositif de rail selon la revendication 5,
**caractérisée en ce que** le dispositif de fixation pour le dispositif électrique de transfert d'énergie et/ou de signaux (14, 14s) est monté de manière détachable sur le profilé du rail (3, 3a, 3b), le dispositif de fixation présentant de préférence un dispositif d'encliquetage et/ou un dispositif d'adhésion détachable et/ou un dispositif à aimantation permanente et/ou un dispositif à vissage ou similaire.

7. Porte avec un dispositif de rail selon la revendication 5,
**caractérisée en ce que** le dispositif de fixation pour le dispositif électrique de transfert d'énergie et/ou de signaux (14, 14s) s'étend sur toute la longueur du profilé du rail (3, 3a, 3b) ou sur des portions du profilé du rail (3, 3a, 3b).

8. Porte avec un dispositif de rail selon la revendication 5,
**caractérisée en ce que** le dispositif de fixation pour le dispositif électrique de transfert d'énergie et/ou de signaux (14, 14s) est réalisé sous la forme d'un isolateur électrique (14i).

9. Porte avec un dispositif de rail selon la revendication 5,
**caractérisée en ce que** le dispositif de fixation pour le dispositif électrique de transfert d'énergie et/ou de signaux (14, 14s) est réalisé de telle sorte qu'il en résulte une connexion par force et/ou par crabotage entre le dispositif de fixation et le dispositif électrique de transfert d'énergie et/ou de signaux (14, 14s).

10. Porte avec un dispositif de rail selon la revendication 1,
**caractérisée en ce que** le dispositif à câble (14) est réalisé en tant que câble plat avec des brins juxtaposés (14a, 14b, 14c, 14d, 14e, 14f).

11. Porte avec un dispositif de rail selon la revendication 1,
**caractérisée en ce que** la connexion électrique entre le dispositif électrique de transfert d'énergie et/ou de signaux (14, 14s) et le dispositif électrique (34, 35, 36, 38, 39) est réalisée par le biais de broches de contact à tête à fileter (17) venant en prise avec le dispositif électrique de transfert d'énergie et/ou de signaux (14, 14s).

12. Porte avec un dispositif de rail selon la revendication 1,
**caractérisée en ce que** la connexion électrique entre le dispositif électrique de transfert d'énergie et/ou de signaux (14, 14s) et le dispositif électrique (34, 35, 36, 38, 39) est réalisée par le biais d'un raccord à fiche et douille (18).

13. Porte avec un dispositif de rail selon la revendication 1,
**caractérisée en ce que** la connexion électrique entre le dispositif électrique de transfert d'énergie et/ou de signaux (14, 14s) et le dispositif électrique (34, 35, 36, 38, 39) est réalisée par le biais de curseurs.

14. Porte avec un dispositif de rail selon la revendication 1,
**caractérisée en ce que** la connexion électrique entre le dispositif électrique de transfert d'énergie et/ou de signaux (14, 14s) et le dispositif électrique (34, 35, 36, 38, 39) est réalisée par le biais de broches de contact élastiques (19a, 19b, 19c, 19d).

15. Porte avec un dispositif de rail selon la revendication 1,
**caractérisée en ce que** le dispositif à câble (14) est connecté électriquement à des douilles (18) espacées, de préférence suivant des intervalles de grille, des raccords à fiche enfichables dans les douilles (18) de manière biunivoque, protégés contre les inversions de polarité, étant prévus et alimentant le dispositif électrique (34, 35, 36, 38, 39) en énergie électrique et/ou en signaux électriques.

16. Porte avec un dispositif de rail selon la revendication 15,
**caractérisée en ce que** chaque contact d'une douille (18) est connecté électriquement à un conducteur associé (14a, 14b, 14c, 14d, 14e, 14f) du dispositif à câble (14).

17. Porte avec un dispositif de rail selon la revendication 1,
comprenant un premier vantail (1a) qui est équipé d'un premier entraînement (8a), et un deuxième vantail (1b) qui est équipé d'un deuxième entraînement (8b),
**caractérisée en ce que** dans le boîtier, de préférence le boîtier profilé, du dispositif de rail (3) sont disposés un premier rail (3a) et un deuxième rail (3b) axialement l'un derrière l'autre, le bras coulissant (7a) du premier entraînement (8a) étant guidé à coulissement dans ou sur le premier rail (3a), et le bras coulissant (7b) du deuxième entraînement (8b) étant guidé à coulissement dans ou sur le deuxième rail (3b) et le détecteur de fumée (35) étant disposé dans ou sur le boîtier, de préférence à l'intérieur du boîtier ou attaché à celui-ci, et étant raccordé électriquement au dispositif électrique de transfert d'énergie et/ou de signaux (14, 14s).

18. Porte avec un dispositif de rail selon la revendication 17,
**caractérisée en ce que** le dispositif électrique, en particulier le détecteur de fumée (35), le dispositif de fixation (36a, 36b), est disposé entre le premier rail (3a) et le deuxième rail (3b).

19. Porte avec un dispositif de rail selon la revendication 17,
**caractérisée en ce qu'**un dispositif de fixation (36a, 36b) coopérant avec l'extrémité de guidage du bras coulissant (7a, 7b), est disposé dans la région du rail (3a, 3b), de préférence à l'intérieur du boîtier du rail (3a, 3b), de préférence le premier dispositif de fixation (36a) dans la région du premier rail (3a), et le deuxième dispositif de fixation (36b) dans la région du deuxième rail (3b).

20. Porte avec un dispositif de rail selon la revendication 17,
**caractérisée en ce que** dans la région du rail (3a, 3b), de préférence à une distance prédéterminée du dispositif de fixation (36a, 36b), est disposé un minirupteur (38a, 38b) qui coopère avec l'extrémité de guidage du bras coulissant (7a, 7b), pour détecter la position du vantail, le minirupteur (38a, 38b) étant raccordé électriquement au dispositif électrique de transfert d'énergie et/ou de signaux (14, 14s).

21. Porte avec un dispositif de rail selon la revendication 17,
**caractérisée en ce que** l'entraînement est un dispositif de fermeture de porte (8a, 8b) avec un ressort de fermeture, qui est chargé lors de l'ouverture manuelle ou motorisée du dispositif de fermeture de porte (8a, 8b) et qui se ferme alors automatiquement, de préférence avec un dispositif amortisseur pour le mouvement d'ouverture et/ou de fermeture, par exemple un dispositif d'amortissement hydraulique.
